# EUROPEAN PATENT APPLICATION

(11) **EP 2 679 713 A1**
(43) Date of publication of application: **01.01.2014**
(21) Application number: 12425117.4
(22) Date of filing: 26.06.2012
(51) Int. Cl.: D04H 3/12, D04H 3/14, D04H 13/00, D04H 1/435, D04H 1/485, D04H 1/645, D04H 3/004, D04H 3/105, D04H 1/542, D04H 1/488, D04H 3/011, B32B 5/26

(54) **Support in nonwoven textile reinforced with threads and process for making such support**

(71) Applicant: O.R.V. Ovattificio Resinatura Valpadana S.p.a., 35010 Grantorto (Padova) (IT)
(72) Inventor: Peruzzo, Maurizio, 35010 Grantorto, Padova (IT)
(74) Representative: Mitola, Marco

(57) **Abstract**

The present invention relates to a support in non-woven textile reinforced with threads comprising at least two webs of nonwoven spunbond and a plurality of reinforcement threads which are positioned between the two webs of nonwoven with an overall orientation parallel to a longitudinal direction X. The webs and the threads are solidarized to each other by needling, by means of resining through the application of chemical bonding agents and by heat bonding with application of heat bonding fibres. According to the invention, the reinforcement threads are associated with the webs and are subjected to solidarization together with said webs without applying to the threads and to the webs a tension along said longitudinal direction. This way during the assembly and solidarization steps with the webs, the reinforcement threads are free to move and to misalign locally in relation to the longitudinal direction. The support has the reinforcement threads blocked in the final position assumed in relation to said webs by chemical bonding agents and/or by the heat bonding fibres.

## Description

### FIELD OF APPLICATION

The present invention relates to a support in nonwoven textile reinforced with threads and a process for making such support.

The support in nonwoven textile according to the present invention is intended for use in particular for the production of bitumen roof coverings and waterproof liners.

### STATE OF THE ART

Supports in nonwoven textile reinforced with high modulus threads, especially glass threads, for the production of bitumen roof coverings have been known of for some time.

In particular, supports in nonwoven textile reinforced with high elasticity modulus threads, made by inserting the threads between two webs of nonwoven textile are known. The assembly of the two webs and of the intermediate reinforcement threads is achieved by mechanical needling and subsequent chemical bonding (for example by means of resin binding agents) or by heat bonding. The reinforcement threads are distributed parallel to each other in a longitudinal direction of the nonwoven textile (i.e. the machine direction). This disposition of alignment of the threads is achieved by maintaining the reinforcement threads constantly under tension in a controlled manner.

US5118550 in the name of Rhone Poulenc describes a support composed of nonwoven textile obtained from continuous fibre or filaments characterised by the presence of high modulus reinforcing threads (preferably glass threads) arranged parallel to each other in the lengthwise direction and made to cohere with the nonwoven textile by chemical bonding or heat bonding and/or needling. In the finished product the glass threads break at a heat (about 180°C) under a specific load of at least 80 daN per metre in width and the cold modulus is the same as the product without reinforcement threads. The dimensional stability when hot and the deformability of the product are considerably improved compared to standard nonwoven products without reinforcement.

EP0806509B 2 in the name of Johns Manville described a support in spunbond incorporating an assembly of reinforcement threads characterised by the fact of having an elongation reserve of less than 1% and such that in the elongation load diagram (at 20°C) the force recorded in the elongation range 0 to 1% differs by more than 10% of the value of the force referring to spunbond only without reinforcement threads. In such product the reinforcement absorbs the traction forces acting on the entire composite already at low elongations. Such reinforced nonwoven spunbond is produced using a process which envisages feeding the reinforcement threads under longitudinal tension and maintaining the tension in a controlled manner during all heat treatments. Controlled tensioning in the support of the threads in tension, so that they are arranged parallel to each other in a linear manner without any curvature is crucial for obtaining the product described. The use of heat-bonding fibres is also excluded. The tensioning of the threads is obtained in a manner well known to technicians in the sector, by inserting tensioning devices in the production system. Information on such tensioning devices may be found in H.G. Howell, K.K. W. Mieszkis, D. Tabor (1959), Friction in Textiles.

The use of tensioning devices constitutes an element of complexity both as regards plant design (especially in the case in which such tensioning devices are to be inserted in pre-existing systems to be adapted), and as regards their control.

The tensioning of the reinforcement threads considerably increases the risk of rupture of such threads during the production of the support in reinforced nonwoven textile. The reinforcement threads (normally of glass) have, in fact, high elasticity modulus values for their function and thereby fragile behaviour. In particular, the reinforcement consisting of glass multifilaments due to its structure disaggregates more easily with consequent deterioration of its original properties. To this it must be added that the glass threads may have weak points associated with the presence of impurities in the glass structure, which may cause rupture of the filament at certain values of applied force.

The tensioning of the threads must therefore be carefully controlled with evident complications in the control of the system.

### PRESENTATION OF THE INVENTION

Consequently, the purpose of the present invention is to eliminate or at least attenuate the drawbacks of the prior art mentioned above, by making available a support in nonwoven textile reinforced with threads, which has mechanical characteristics of behaviour comparable with those of traditional products.

A further purpose of the present invention is that of making available a support in nonwoven textile reinforced with threads, which has good tear resistance.

A further purpose of the present invention is that of making available a support in nonwoven textile reinforced with threads, which has good delamination resistance.

A further purpose of the present invention is that of making available a process of making a support in non-woven textile reinforced with threads, which makes it possible to simplify the structure and the control of the production plant.

### BRIEF DESCRIPTION OF THE DRAWINGS

The technical characteristics of the invention, according to the aforesaid purposes, can be seen clearly from the contents of the following claims and the advantages of the same will be more clearly comprehensible from the detailed description below, made with reference to the attached drawings, showing one or more embodiments by way of non-limiting examples, wherein:

- figure 1 shows a photograph of a sample of a support in nonwoven textile reinforced with threads according to the present invention wherein the misalignment of the reinforcement threads with each other and in relation to the machine direction is visible;

- figure 2 shows a schematic view of a first part of a production plant of a support in reinforced nonwoven textile according to the present invention; and

- figure 3 shows a schematic view of a second part of the production plant in figure 2.

### DETAILED DESCRIPTION

With reference to the appended drawings, the support in nonwoven textile reinforced with threads according to the present invention has been globally denoted by reference numeral 1.

According to a general embodiment of the invention, the support 1 comprises at least two webs of nonwoven spunbond and a plurality of reinforcement threads which are positioned between the two webs of nonwoven with an overall orientation parallel to a longitudinal direction X corresponding to the machine direction.

As will be explained further below, the two webs and the reinforcement threads are solidarized to each other so as to form the aforesaid support by needling, by resining through the application of chemical bonding agents and (according to an essential aspect of the invention) by heat bonding with application of heat bonding fibres.

According to an essential aspect of the invention the reinforcement threads are associated to the nonwoven webs and are subjected to solidarization together with said webs without applying tension along the aforesaid longitudinal direction X to the threads and to the webs. This way during the assembly and solidarization steps with the webs the reinforcement threads are free to move and to misalign locally in relation to the longitudinal direction X, following the movements of said webs.

Here and henceforth in the description and the claims, "absence of tension or longitudinal tensioning of the reinforcement threads" is understood to mean the absence of controllable and adjustable tensions, imposed on the reinforcement threads by means of tensioning devices or by other parts of the production system. However the presence of some limited longitudinal tensions related to machine friction cannot be excluded inasmuch as neither controllable nor adjustable and even less eliminable. As will be explained further below, the presence of tensions on the threads during the unwinding step from the feed bobbins cannot be excluded either.

As already mentioned above, according to another aspect of the invention, the two webs and reinforcement threads are solidarized to each other by heat-bonding with the application of heat-bonding fibres.

The support 1 according to the invention has the reinforcement threads blocked - in the final position assumed in relation to the webs - by chemical bonding agents and/or by heat bonding fibres.

As will be explained further below, the absence of longitudinal tension determines that the reinforcement threads in the support 1 are locally misaligned in the longitudinal direction X (i.e. machine direction).

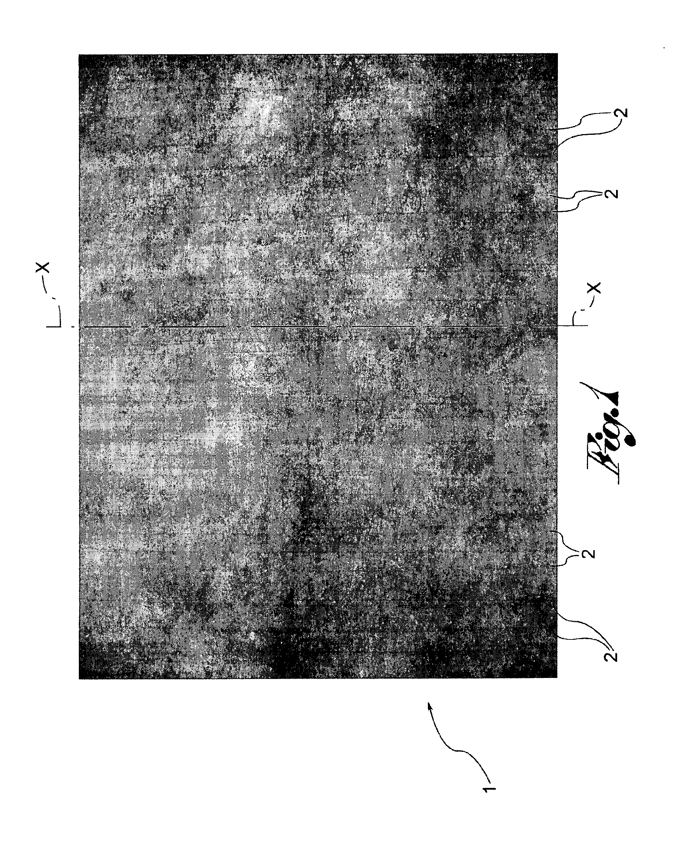

As may be seen in Figure 1, in the reinforced nonwoven support 1 according to the invention the reinforcement threads inserted between the two webs show clear local misalignments. In other words, the rectilinearity and the parallelism between said threads is not retained along the length of the support 1. As already said this is related to the absence of a tension force applied to the threads during their feeding to the support and in the course of downstream solidarization (especially thermic) treatments.

Surprisingly, despite the evident misalignments of the reinforcement threads, the support 1 according to the invention has very low elongation reserve values (understood as the elongation which the layers of nonwoven textile undergo before the force exerted is deviated and absorbed by the reinforcement threads) in any case comparable to analogous traditional supports. In other words, the behaviour of the reinforcement threads is comparable to that of traditional supports where the reinforcement threads are taut and perfectly aligned and thereby able to immediately deviate traction forces, with an elongation reserve value of the support approaching 0%.

This behaviour may be explained by the fact that the absence of tensioning of the reinforcement threads and consequent absences of parallelism and linearity are compensated by the fact that the reinforcement threads are blocked on the nonwoven substrate as a result of the chemical bonding and presence of the heat-bonding fibres.

Therefore the threads, by being anchored to the nonwoven in several points (knots), despite not being parallel to each other or regularly spaced out, if subjected to a traction force, deviate such force (absorbing it) without having to slide and position themselves parallel to the direction of such force, inasmuch as retained to the nonwoven by the "attachment" points determined by the presence of the heat-bonding fibre and/or by the chemical bonding agent.

More specifically, the webs of nonwoven spunbond are composed of continuous filaments made from synthetic polymers, preferably chosen from the group composed in particular of polyesters, copolyesters, polyamides, polyolefins (such as polyethylene or polypropylene) and polyphenylene sulphide (PPS). Preferably, the webs of non woven spunbond are composed of continuous filaments made from polyethylene terephthalate (pure or copolymer).

The reinforcement threads may be single and/or multi filament.

In particular, the reinforcement threads (single or multifilament) are made from glass, polyester, polyamide, metal or metal alloys, aramidic plastics, mineral fibres (such as basalt) or carbon.

Preferably, the chemical bonding agents for resining constitute 5 to 30% in weight of the support.

The chemical bonding agents for resining are chosen from the group comprising in particular acrylic resins, styrol-acrylic resins, vinyl acetate resins, styrene-butadiene resins, metacrylate, acrylamide, vinylacrylate, methylacrylamide, ethylvinylacetate, butadiene-acrylate vinylalcohol, polyurethanic resins, melamminic resins, ureic resins, epoxy resins, polyester, phenol-formaldehyde or combinations of the same.

Preferably, the heat bonding fibres constitute 5 to 15% in weight of the support. The quantity of heat bonding fibres may be over 15% in weight. However the risk of a possible worsening of the performance of the reinforced support when hot increases.

The heat-bonding fibres are chosen in particular from the group comprising polyolefin fibres, copolyester fibres or polyamide fibres.

In particular, the heat-bonding fibres may have a count of 0.8 to 25 dtex, and preferably from 1.5 to 4 dtex. The cut of the heat bonding fibres may be 0.7mm to 75mm. Preferably, the cut is 4 to 12 mm. The short cut of the heat-bonding fibres favours the creation of more bonding points between the filaments of the nonwoven spunbond and the reinforcement threads.

Preferably, the support 1 according to the invention has a basis weight of 50 to 350 g/m².

The present invention relates to a process for making a support in nonwoven textile reinforced with threads 1 as described above, which comprises at least two webs of nonwoven spunbond and a plurality of reinforcement threads which are positioned between the two webs of nonwoven with an overall orientation parallel to a longitudinal direction X corresponding to the machine direction.

According to a general implementation form, the process comprises the following operating steps:

a) forming at least two webs of nonwoven spunbond on two separate mobile distribution belts advancing in the longitudinal direction X;

b) distributing heat bonding fibres at least on the lower web, on top of it;

c) laying a plurality of reinforcement threads directly onto the upper belt with a distribution parallel to the longitudinal direction, below the web formed on such upper belt;

d) laying the upper web and the reinforcement threads associated to it on the lower web so as to form an assembly;

e) mechanically needling the assembly formed of the two webs, reinforcement threads and the heat bonding fibres;

f) impregnating the assembly with chemical bonding agents;

g) heat-treating the assembly so as to solidarize it by resining with the heat reaction of the chemical bonding agents and by heat bonding through melting of the heat bonding fibres.

The reinforcement threads are unwound from the respective feed bobbins simply by pulling of the upper belt.

The advancement of the assembly of webs, reinforcement threads and heat-bonding fibres is conducted at a constant or decreasing speed in the longitudinal direction X in the direction of advancement of the machine at least during the operative steps of solidarization (i.e. needling and heat treatment for resining and heat bonding) envisaged by the process, so as not to impress longitudinal tensions on the reinforcement threads.

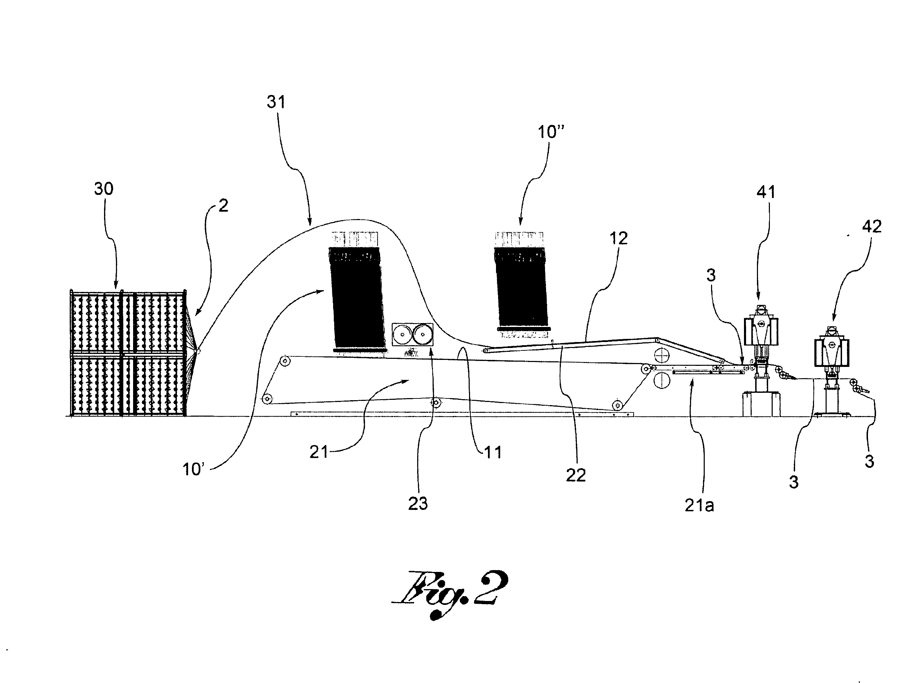

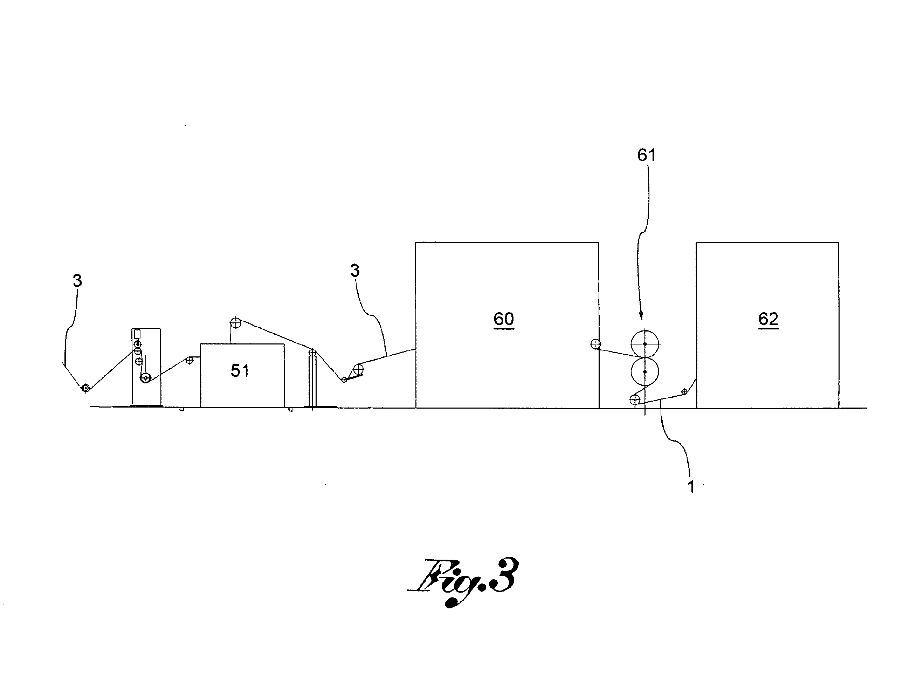

The process will now be described in detail according to a particular form of implementation, with reference to the simplified plant diagram in figures 2 and 3.

The production process envisages the formation, by extrusion and spinning, of continuous synthetic polymer filaments (preferably PET) which, after coming off the spinning lines are first cooled by jets of cold air and then drawn by means of a system of compressed air nozzles.

As illustrated in Figure 2, the plant comprises two extrusion and spinning systems 10' and 10", for the formation of two webs of nonwoven spunbond.

A first extrusion and spinning system 10' permits formation of the first web 11 (first side web) on a first moving belt 21. The first web 11 is then transported towards the input cylinders of a pre-needling machine 41.

A second extrusion and spinning system 10" permits formation of a second web 12 (second side web) on a second moving belt 22, superposed over the first belt 21. As will be explained further below, the reinforcement threads 2 are associated to the second web 22 at the input of said second moving belt 22.

On input to the pre-needling machine 41 the first web 11 is associated to the second web 12, to which the reinforcement threads 2 are associated. The assembly 3, formed by the union of the two webs 11,12 and the reinforcement threads 2, passes through the pre-needling machine 41 and then through the needling machine 42 where the assembly 3 is solidarized assuming the consistency/structure of a nonwoven. The needling is performed, in particular, with a punch density of 25 to 200 punches/cm².

The reinforcement threads 2 (preferably in glass fibre) are taken from spools mounted on a traditional distribution creel 30. In the creel 30 the threads are initially guided by ceramic bushes and hollows and, subsequently, outside the creel by a plurality of guide tubes 31 (preferably in steel).

The reinforcement threads 2, picked up from the creel 30, are deposited, by a plurality of guide tubes 31, on the second moving belt 22, immediately upstream of the second extrusion and spinning system 10". On the second belt 22 the threads are covered in extruded material which will constitute the second web. The reinforcement threads thereby find themselves under the second web and are kept adherent to the belt by means of a suction system. This way the speed of the reinforcement threads is guaranteed to be the same as the speed of advancement of the second belt 22 and therefore the speed of the second web 12.

The function of the guide tubes 31 is to make the movement of the reinforcement threads 3 smooth and prevent impacts between adjacent threads. No specific tensioning system is used, except the creel's own 30, needed to unwind from the bobbins. The threads are unwound inasmuch as dragged by the friction forces exchanged with the second moving belt 22 and with the second web 12. It has been observed that this condition does not define a tensioning of the threads such as to ensure a regular alignment thereof. In fact the threads can move transversally, randomly altering their relative distance under the effect of the disturbing forces, such as those produced by the thrust of the threads constituting the second web.

As already said, the first web 11 is distributed on the first forming belt 21 and conducted by other transport belts 21a to the input cylinders of the pre-needling machine 41. The first belt 21 and the transport belts advance in the machine direction X at a constant speed V1. The reinforcement threads in glass move together with the second web 12 on the second moving belt 22 which advances in the machine direction X at a constant speed V2.

Defining the tangential speed of the input cylinders of the pre-needling machine as Vin, the process envisages that Vin is equal to V2. The reinforcement threads placed under the second web bond to the webs of PET filaments by means of more stages of needling for each of which the input speed Vin is equal to the output speed Vout.

Due to the expedient described above, the absence of tensioning of the reinforcement threads is also ensured during the solidarization step with needling. Confirming such, it may in fact be observed that by removing part of the second web placed above the reinforcement threads there is a marked perturbation of the preordained pattern initially given by the guide tube of the threads on the second formation belt 22. In particular, this perturbation is caused by the intense movement of the needles and may occur because the absence of tension of the reinforcement threads leads the same to undergo random and local shifts caused by external forces acting on the spunbond matrix and/or on the thread itself. If the second web is repositioned over the reinforcement threads before entering the pre-needling machine the initial condition is restored. This does not happen instantly but after a short time of settling depending on the speed of the process and characteristics of the plant.

The short heat bonding fibre (preferably polyolefinic, with a cut of about 6mm) is fed, by a dosing machine 23, onto the first web 11, before the latter is joined to the second web 12 and the reinforcement threads 2 at the entrance to the pre-needling machine.

As illustrated in Figure 3, at the output of the needling machine 42, the assembly 3 is then subjected to resining. Impregnation with the chemical bonding agents takes place by means of a foulard 51 by immersion in a tank and subsequent wringing with pressurised rollers.

The assembly 3 is then inserted in a drying oven 60 with a series of perforated drums (of the same diameter) and then traversed by a forced flow of heated air. The oven operates at a temperature of 150°C to 230°C. The speeds of the drums are constant or decreasing in the direction of advancement of the support 1. Inside the oven 60 the chemical bonding agent proceeds with polymerisation /cross linking and the heat bonding fibres soften/melt to perform their binding function between the two webs. During this step of heat treatment a shifting of the reinforcement threads in relation to one another within the matrix of nonwoven generated by the transversal shrinkage of the nonwoven is unavoidable due to the absence of longitudinal tension n.

Coming out of the oven 60, the support 1 then traverses a cold calender 61. The finished support 1 is then forwarded to a storage drum /winder 62 for storage.

An example of a support 1 according to the invention made using the process described above will now be described. The nonwoven spunbond is made from polyester (polyethylene terephthalate, PET). As a chemical bonding agent styrol-acrylic resin in an aqueous dispersion was used combined with melamine-formaldehyde based thermosetting resin (in a ratio of 94:6), applied to the support in a quantity of 16% in weight. As reinforcement threads, glass threads manufactured by Saint-Gobain Vetrotex type EC9 68 Z28 T6C H8 were used. The number of threads introduced was on average about 10 for each 10cm in width of the support. Polypropylene fibres, manufactured by MERAKLON, called MERAFLEX KTE-2,8 TOW NC (Type 15), with a count of 2.8 dtex and cut of 6 mm were used as heat bonding fibres. 10 g/m² of PP fibre were introduced. A pre-needling machine with Groz-Beckert needles 15X17X36X3,5" R222 G 53027 and a needling machine with Groz-Beckert needles 15X17X36X3" C111 G 53017 were used. The overall punch density was set at 55 punches/cm².

Comparative tearing and delamination tests were conducted on a sample of the support 1 according to the invention (as described above, support A), and a sample of a support produced in the same manner but without the heat bonding fibres.

Resistance to tearing, determined using the nail shank method, shows the resistance of the manufactured product to tearing induced by a nail shank. The tests were conducted according to the standard for determining tearing (nail shank) UNI EN 12310-1 Flexible sheets for waterproofing - Part 1: Bitumen sheets for roof waterproofing - Determination of resistance to tearing (nail shank).

The tearing resistance properties are an important characteristic, especially with reference to the final application of the bitumen sheet which the support in nonwoven textile represents the core of. Good tear resistance translates into a good resistance to the propagation of any ruptures /tears induced.

The results of the comparative tearing tests are shown in Table 1 below.

**Table 1**

| | Support B | Support A |
|---|---|---|
| Total basis weight support | 102 g/m2 | 101 g/m2 |
| Quantity of PP fibre | - | 10 g/m2 |
| Longitudinal tearing (MD) | 105 N | 122 N |
| Cross tearing (CD) | 98 N | 125 N |

It may be seen how support A has a greater resistance to tearing than support B both in a longitudinal direction (machine direction MD), and in a cross direction CD. This is related to the presence of the heat bonding fibres. A greater resistance to tearing of the support in nonwoven spunbond leads to improved performance of the finished product (bitumen liner). Liners may in fact be applied to roofs by mechanical attachment; a good resistance to tearing makes it possible to limit any ruptures or propagation of tears following application.

Resistance to delamination is the resistance posed by the material to the separation of the two webs.

The tests were conducted according to the standard for determining delamination: DIN 53357 Testing of plastics sheets; adhesion test.

High delamination resistance corresponds to a good cohesion of the two webs. In other words, the support (composite) has a low tendency to separate into the two layers which compose it, inasmuch as well solidarized.

The results of the comparative adhesion tests are shown in Table 2 below.

**Table 2**

| | Support B | Support A |
|---|---|---|
| Total basis weight support | 102 g/m2 | 101 g/m2 |
| Quantity of PP fibre | - | 10 g/m2 |
| Delamination | 11.3 N | 19.8 N |

It may be seen how support A has a greater delamination resistance than support B. This is related to the presence of the heat bonding fibres. The reinforcement thread is in itself an element which may favour the delamination of the layers. The presence of heat bonding fibres helps to improve the bond both between the two webs and most of all between the webs and the reinforcement thread. The heat bonding fibre, subjected to appropriate heat treatment, by melting and penetrating the interstices of the spunbond filaments, creates randomly positioned three dimensional bonding points which favour web-reinforcement-web cohesion.
In relation to the production process, it was noted that over time the efficacy of the mechanical needling in terms of solidarization of the textile may diminish on account of the abrasion caused by contact of the needle with the reinforcement and the wear of said needles. Such negative effect is offset by the improved cohesion of the two webs related to the presence of the heat bonding fibres.

The invention thereby makes it possible to achieve numerous advantages, some of which spoken of above.

Due to the invention it is possible to make a support in nonwoven textile reinforced with threads having mechanical characteristics of behaviour comparable with those of traditional products without having to subject the reinforcement threads to longitudinal tension.

It no longer being necessary to tension the threads, the process and relative production plant prove simplified. The plant in fact does not need to be provided with tensioning devices; the process does not envisage careful control of the tension.

Due to the absence of tensioning the reinforcement threads, subjected to the action of the needles (during the needling step), are less likely to break and /or tear in that they are free to move and deviate from the initial position in input to the needling machine, locally following the movements of the polyester matrix. In addition, this way, even in the case of using particularly aggressive needles (high kick-up value) the reinforcement thread - free of tension - is subjected to less stress caused by the stresses of said needle. As regards the condition of the reinforcement threads this is particularly important for reinforcement threads composed of multifilaments.

The absence of tensioning of the threads significantly reduces in addition the probability of the threads breaking following longitudinal stress.

The presence of heat bonding fibres gives the finished support 1 a greater resistance to delamination, especially when the quality of the needling becomes poorer during the production process, and a greater resistance to tearing.

The short cut of the heat-bonding fibres favours the creation of more bonding points between the filaments of the nonwoven spunbond and the threads.

The invention thus conceived thereby achieves the intended objectives.

Obviously, its practical embodiments may assume forms and configurations different from that described above while remaining within the present sphere of protection.

Furthermore, all the parts may be replaced with technically equivalent parts and the dimensions, shapes and materials used may be varied as required.

## Claims

1. Support in non-woven textile reinforced with threads, comprising at least two webs of nonwoven spunbond and a plurality of reinforcement threads which are positioned between the two webs of nonwoven with an overall orientation parallel to a longitudinal direction (X) corresponding to the machine direction, the two webs and the reinforcement threads being solidarized to each other by needling and by means of resining through the application of chemical bonding agents so as to form said support,
**characterised by** the fact that the reinforcement threads are associated with the non woven webs and are subjected to solidarization together with said webs without applying to the threads and to the webs a tension along said longitudinal direction (X), in such a way that during the assembly and solidarization steps with the webs, the reinforcement threads are free to move and to misalign locally in relation to the longitudinal direction (X) following the movements of said webs,
and by the fact that the two webs and the reinforcement threads are solidarized to each other by heat-bonding with the application of heat-bonding fibres, the support having the reinforcement threads blocked in the final position assumed in relation to said webs by chemical bonding agents and/or by the heat bonding fibres.

2. Support according to claim 1, wherein the reinforcement threads are locally misaligned in said longitudinal direction (X).

3. Support according to claim 1 or 2, wherein the webs of nonwoven spunbond are composed of continuous filaments made from synthetic polymers, preferably chosen from the group composed of polyesters, copolyesters, polyamides, polyolefins, polyphenylene sulphide.

4. Support according to claim 1 or 2, wherein the webs of non woven spunbond are composed of continuous filaments made from polyethylene terephthalate.

5. Support according to one or more of the previous claims, wherein the reinforcement threads are single and/or multi filament.

6. Support according to one or more of the previous claims, wherein the reinforcement threads are made from glass, polyester, polyamide, metal or metal alloys, aramidic plastics, mineral fibres or carbon.

7. Support according to one or more of the previous claims, wherein the chemical bonding agents for resining are chosen from the group composed of acrylic resins, styrol-acrylic resins, vinyl acetate, styrene-butadiene resins, metacrylate, acrylamide, vinylacrylate, methylacrylamide, ethylvinylacetate, butadiene-acrylate vinylalcohol, polyurethanic resins, melamminic resins, ureic resins, epoxy resins, polyester, phenol-formaldehyde resins or their combinations.

8. Support according to one or more of the previous claims, wherein the chemical bonding agents for resining constitute 5 to 30% in weight of the support.

9. Support according to one or more of the previous claims, wherein the heat-bonding fibres are chosen from the group composed of polyolefin fibres, copolyester fibres or polyamide fibres.

10. Support according to one or more of the previous claims, wherein the heat bonding fibres constitute 5 to 15% in weight of the support.

11. Support according to one or more of the previous claims, wherein the heat-bonding fibres have a count of 0.8 to 25 dtex, and preferably 1.5 to 4 dtex.

12. Support according to one or more of the previous claims, wherein the heat-bonding fibres have a cut of 0.7mm to 75 mm, and preferably 4 to 12 mm.

13. Support according to one or more of the previous claims, wherein the support has a basis weight of 50 to 350 g/m2.

14. Support according to one or more of the previous claims, wherein the needling is performed with a punch density of 25 to 200 punches /cm2.

15. Process for making a support in nonwoven textile reinforced with threads according to claim 1, comprising at least two webs of nonwoven spunbond and a plurality of reinforcement threads which are positioned between the two webs of nonwoven with an overall orientation parallel to a longitudinal direction (X) corresponding to the machine direction, said process comprising the following operating steps:
a) forming at least two webs of nonwoven spunbond on two separate mobile distribution belts which advance in said longitudinal direction (X);
b) distributing heat bonding fibres at least on the lower web, on top of it;
c) laying a plurality of reinforcement threads directly onto the upper belt with a distribution parallel to the longitudinal direction (X), below the web being formed on such upper belt;
d) laying the upper web and the reinforcement threads associated to it on the lower web so as to form an assembly;
e) mechanically needling the assembly formed of the two webs, reinforcement threads and the heat bonding fibres;
f) impregnating the assembly with chemical bonding agents;
g) heat treating the assembly so as to solidarize the assembly by resining with the heat reaction of the chemical bonding agents and by heat bonding with the softening / melting of the heat bonding fibres,
the reinforcement threads being unwound from the respective feed bobbins simply by pulling of the upper belt, the advancement of the assembly being conducted at a constant or decreasing speed in the longitudinal direction (X) in the direction of advancement of the machine at least in the operative steps of solidarization.
